# EUROPÄISCHE PATENTANMELDUNG

(11) **EP 3 229 183 A1**
(43) Veröffentlichungstag der Anmeldung: **11.10.2017**
(21) Anmeldenummer: 16164504.9
(22) Anmeldetag: 08.04.2016
(51) Int. Cl.: G06Q 10/06

(54) **VORRICHTUNG UND VERFAHREN ZUR ÜBERWACHUNG VON PROZESSDATEN BEI DER STRASSENFERTIGUNG**

(71) Anmelder: MOBA Mobile Automation AG, 65555 Limburg (DE)
(72) Erfinder: Watermann, Marcus, 65555 Limburg (DE); Becher, Dominik, 65555 Limburg (DE)
(74) Vertreter: Zimmermann, Tankred Klaus

(57) **Zusammenfassung**

Zur Überwachung von Prozessdaten bei der Straßenfertigung wird ein wearable Computer (122, 124) verwendet. Der wearable Computer (122, 124) empfängt Prozessdaten der Straßenfertigung. Bei Prozessdaten (152, 158), die außerhalb eines vorbestimmten Bereichs liegen, bewirkt der wearable Computer (122, 124) eine Alarmierung des Trägers (118) des wearable Computers (122, 124).

## Beschreibung

Die vorliegende Erfindung bezieht sich auf das Gebiet der Straßenfertigung, insbesondere auf die Überwachung von Prozessdaten bei einer Straßenfertigung, wie sie beispielsweise bei der Vorbereitung des Untergrunds zur Fertigung der neuen Straße, bei der Einbringung der Asphaltdecke und bei der Nachbearbeitung der eingebrachten Asphaltdecke anfallen. Solche Prozessdaten umfassen z.B. die Temperatur des Asphaltmaterials vor dem Einbringen desselben als Straßenbelag, während des Einbringens und während der Nachbearbeitung, die Schichtdicke des eingebrachten Materials, oder die Schichtdicke von entferntem Untergrunds, beispielsweise durch Fräsen oder durch andere Erdbearbeitungsmaschinen. Weitere Prozessdaten umfassen die Überwachung der Temperatur während der Anlieferung von dem Herstellungsort des Asphaltmaterials bis zur Baustelle bzw. die Zeitdauer des Transports oder die Standzeiten von Baufahrzeugen, die das Asphaltmaterial transportieren. Die vorliegende Erfindung bezieht sich somit insbesondere auf das Gebiet von Baumaschinen und Baufahrzeugen, wie beispielsweise Straßenfertigern, Straßenfräsen, Straßenwalzen, und LKWs bzw. Baufahrzeugen zum Transport von Asphalt.

Bei der Herstellung eines Straßenbelags fällt eine Vielzahl von Prozessdaten an. Angefangen bei einem Asphaltmischwerk, über den Transport und Einbau des Asphalts bis hin zur Fertigstellung des Straßenbelags. Die Prozessdaten sind beispielsweise die Temperatur des Asphalts, das Gewicht des verbauten Asphalts, die Verdichtungswerte, der Entmischungsgrad, die Ebenheit oder die Schichtdicke der fertiggestellten Straße. Um eine hohe Qualität und Langlebigkeit der Straße sicherzustellen, sollten diese Prozessdaten permanent überwacht werden. Weiterhin spielen in dem Fertigungsprozess der Materialverbrauch sowie die LKW-Standzeiten, z.B. die Wartezeiten vor dem Fertiger, eine ebenso wichtige Rolle und beeinflussen die Qualität der zu erstellenden Straßenoberfläche, da beispielsweise bei längeren LKW-Standzeiten das Material stärker auskühlt, oder aufgrund eines zu hohen Materialverbrauchs erhöhte Kosten der Straße anfallen, die im Regelfall von dem ausführenden Unternehmen zu tragen sind.

Somit besteht bei der Herstellung einer Straße ein großes Interesse an einem optimierten Einbauprozess. Im Stand der Technik sind Ansätze bekannt, den gesamten Bauprozess hinsichtlich der Laufzeiten des Fertigers sowie hinsichtlich der Materialversorgung, nämlich der Anlieferung des Asphalts durch die LKWs, sowie die oben erwähnten LKW-Standzeiten zu überwachen und in einem optimalen Bereich zu halten. Weiterhin sind Ansätze bekannt, bei denen einige der oben erwähnten Prozessdaten, welche durch verschiedene Maschinen und Fahrzeuge auf dem Weg vom Asphaltmischwerk bis zur Baustelle beeinflusst bzw. verändert werden, kontinuierlich überwacht werden und dokumentiert werden, beispielsweise durch das System BPO der Volz Consulting GmbH (siehe http://www.volzconsulting.de).

Der Nachteil der im Stand der Technik bekannten Ansätze besteht darin, dass hier an der Baustelle tragbare Computergeräte zum Einsatz kommen, beispielsweise Laptops, Smartphones oder Tablet-Computer, auf welchen entsprechende Softwareprogramme ablaufen, über die eine Überwachung der oben erwähnten Prozessdaten durch einen Bauleiter ermöglicht wird. Die bekannten Ansätze arbeiten jedoch derart, dass der gesamte Bauprozess und die relevanten Prozessdaten bereitgestellt werden, so dass es für den Bauleiter bzw. Projektleiter vor Ort aufwendig ist, sämtliche Prozessdaten im Blick zu halten, insbesondere im Hinblick darauf, dass sich bestimmte Daten innerhalb bestimmter Grenzen bewegen. Ändert sich ein Datenwert, so dass dieser außerhalb des genannten Bereichs liegt, ist dies für den Bauleiter nicht ohne Weiteres ersichtlich, selbst dann, wenn das Gerät einen visuellen, akustischen oder taktilen Alarm (Vibrationsalarm) erzeugt, da das Gerät nicht zu jedem Zeitpunkt vom Bauleiter gehalten wird oder beobachtet wird, da dieser im Rahmen seiner Bauleitertätigkeit Tätigkeiten ausführt, während der er keinen Blick auf die bereitgestellten Prozessdaten hat, beispielsweise bei der Erteilung von Anweisungen oder bei einer Besprechung mit anderen Personen an der Baustelle. Somit kann eine Situation eintreten, in der ein Datenwert einen zulässigen Bereich oder erwünschten Bereich verlässt und dies erst verspätet erkannt wird, so dass die entsprechenden Gegenmaßnahmen mit einem zeitlichen Versatz zum Einsatz kommen.

Ausgehend von diesem Stand der Technik liegt der vorliegenden Erfindung die Aufgabe zugrunde, einen verbesserten Ansatz zur Überwachung von Prozessdaten bei der Straßenfertigung zu schaffen.

Diese Aufgabe wird durch eine Vorrichtung und durch ein Verfahren zur Überwachung von Prozessdaten bei der Straßenfertigung gemäß den unabhängigen Patentansprüchen gelöst.

Die vorliegende Erfindung schafft eine Vorrichtung zur Überwachung von Prozessdaten bei der Straßenfertigung, mit:
einem wearable Computer,
wobei der wearable Computer konfiguriert ist, um Prozessdaten der Straßenfertigung zu empfangen, und
wobei der wearable Computer konfiguriert ist, um bei Prozessdaten, die außerhalb eines vorbestimmten Bereichs liegen, eine Alarmierung des Trägers des wearable Computers zu bewirken.

Gemäß Ausführungsbeispielen kann vorgesehen sein, dass der wearable Computer eine visuelle Alarmierung, eine akustische Alarmierung, eine taktile Alarmierung oder eine Kombination dieser Alarmierungen bewirkt, wobei die taktile Alarmierung einen Vibrationsalarm umfassen kann. Gemäß weiteren Ausführungsbeispielen ist der wearable Computer konfiguriert, um die Prozessdaten einem Träger des wearable Computers darzustellen. Gemäß wiederum weiteren Ausführungsbeispielen handelt es sich bei dem wearable Computer um eine Datenuhr (z.B. eine Smartwatch) oder um eine Datenbrille (z.B. Smart Eyeglasses) oder um eine elektronisch Kontaktlinse oder um ein Head-Up Display oder um ein Augmented-Reality-Anzeigegerät bzw. ein ähnliches adaptives Gerät, die durch den Träger, beispielsweise den Bauleiter, getragen wird.

Die erfindungsgemäße Vorrichtung ist vorteilhaft, da hierdurch einem an einer Baustelle befindlichen Bauleiter, Projektleiter oder einer ähnlichen Person ermöglicht wird, schneller kritische Daten bzw. kritische Bereiche während eines Straßenfertigungsprozesses zu erkennen, wodurch er in die Lage versetzt wird, entsprechende Gegenmaßnahmen schneller zu ergreifen. Die Verwendung eines wearable Computers, beispielsweise einer am Armgelenk getragenen Datenuhr, auch als Smartwatch bezeichnet, oder einer getragenen Datenbrille, ist vorteilhaft, da hierdurch sichergestellt ist, dass der Träger stets in Verbindung mit dem wearable Computer ist, auf dem die Daten angezeigt werden, sich aber weiterhin hauptsächlich auf seine Arbeit konzentrieren kann, da er nicht stetig ein Display oder Monitor überwachen muss. Ferner bewirken Prozessdaten, die außerhalb eines vorbestimmten Bereichs liegen, eine Alarmierung durch das wearable Computergerät, welche direkt durch den Träger dieses wearable Computers wahrgenommen wird, beispielsweise durch einen Vibrationsalarm, der am Handgelenk bzw. im Gesicht des Trägers wahrnehmbar ist und die Aufmerksamkeit des Trägers auf den wearable Computer und die angezeigten Prozessdaten lenkt, so dass der Träger ohne Weiteres und ohne Zeitverlust ein Verlassen von Prozessdaten aus einem erwünschten Bereich erkennt und entsprechende Gegenmaßnahmen ergreifen kann. Hierdurch werden die oben erwähnten Probleme im Zusammenhang mit einer reduzierten Qualität des Einbaus bzw. im Zusammenhang mit möglichen erhöhten Kosten aufgrund eines erhöhten Materialaufwands vermieden.

Gemäß Ausführungsbeispielen der vorliegenden Erfindung ist vorgesehen, dass der wearable Computer konfiguriert ist, um die Prozessdaten von einer Baustelle, an der die Straßenfertigung durchgeführt wird, von einem Herstellungsort, an dem das Material zur Straßenfertigung erzeugt wird, und/oder von einer oder mehreren Positionen zwischen dem Herstellungsort und der Baustelle zu empfangen.

Diese Vorgehensweise ist vorteilhaft, da hierdurch während des gesamten Fertigungsprozesses, begonnen am Asphaltmischwerk bis zur Fertigstellung des Straßenbelags kritische Prozessdaten überwacht werden können, um so den Bauleiter, der an der Baustelle ist, von möglichen Abweichungen umgehend zu informieren. Beispielsweise ermöglicht der erfindungsgemäße Ansatz bereits am Mischwerk auftretende Abweichungen einer Temperatur des Asphaltmaterials von einer Zieltemperatur zu erkennen, so dass der Bauleiter bereits vor dem Abtransport des Asphaltmaterials durch eine Kontaktaufnahme mit dem Asphaltmischwerk auf diesen Fehler hinweisen kann, so dass das zu kühle Asphaltmaterial bzw. das zu heiße Asphaltmaterial die Baustelle gar nicht erst erreicht. Ebenso können auch andere Parameter des Asphaltmaterials an dem Asphaltmischwerk erkannt werden und im Hinblick auf die Einhaltung von bestimmten Parameterwerten überwacht werden, wie beispielsweise die Menge des Materials über das Gewicht, welches von dem Asphaltmischwerk abgegeben wird. Ferner kann entlang der Strecke vom Asphaltmischwerk bis zur Baustelle über eine Kommunikation mit dem Transportfahrzeug bzw. Baufahrzeug die Temperatur überwacht werden, um so beispielsweise dem Fahrer des Fahrzeugs Anweisungen zu geben, zügig zur Baustelle zu fahren, um das Asphaltmaterial mit einer ausreichenden Temperatur abzuliefern. Auch die Anzahl der auf dem Weg zur Baustelle befindlichen Transportfahrzeuge kann überwacht werden, so dass beispielsweise dann, wenn eine Wartezeit der Baufahrzeuge an der Baustelle vor dem Fertiger einen Grenzwert überschreitet, weitere Fahrzeuge nicht angefordert werden.

Gemäß weiteren Ausführungsbeispielen umfasst die Vorrichtung einen Computer, der konfiguriert ist, um Prozessdaten für eine Mehrzahl von Parametern der Straßenfertigung zu empfangen, wobei der Computer und der wearable Computer jeweils ein Drahtloskommmunikations-Modul umfassen, und wobei der Computer konfiguriert ist, um dem Träger des wearable Computers zu ermöglichen, aus der Mehrzahl von Parametern der Straßenfertigung zumindest einen Parameter auszuwählen, und um eine Übertragung der Prozessdaten des ausgewählten Parameters an den wearable Computer zu bewirken.

Diese Ausgestaltung ist vorteilhaft, da es eine Zusammenwirkung mit im Stand der Technik bekannten tragbaren Computern, beispielsweise Laptops, Smartphones oder Tablet-Computern, ermöglicht, auf denen bereits, wie oben in der Beschreibungseinleitung erläutert wurde, Prozessdaten für die Baustelle gesammelt werden. Ein Benutzer, beispielsweise der Projektleiter, kann über diese Geräte auswählen, welche Prozessdaten zum jetzigen Zeitpunkt kritisch sind, und welche Bereiche eingehalten werden müssen, so dass nur die kritischen Prozessdaten an den wearable Computer übertragen werden, um dort die erfindungsgemäße Alarmierung direkt am Träger des wearable Computers zu bewirken.

Gemäß Ausführungsbeispielen der Erfindung umfasst der Computer einen tragbaren Computer, der an der Baustelle angeordnet ist oder einen Steuerrechner einer Baumaschine, eines Baufahrzeugs oder eines Sensors.

Diese Ausgestaltung ist vorteilhaft, da erfindungsgemäß die Verwendung von tragbaren Computern, wie sie bei bekannten Ansätzen bereits zum Einsatz kommen, ermöglicht wird, ohne dass zusätzliche Hardware erforderlich wäre. Auch die Verwendung des Steuerrechners einer Baumaschine, eines Baufahrzeugs oder eines Sensors ist vorteilhaft, da auch hier direkt auf existierende Hardware zurückgegriffen werden kann, mit der der wearable Computer direkt in Kontakt treten kann, um die erfindungsgemäße Funktionalität bereitzustellen.

Gemäß einem weiteren Ausführungsbeispiel umfasst die Vorrichtung einen Zentralrechner, der entfernt von der Baustelle und dem Herstellungsort angeordnet ist, und der ein Mobilfunk-Modul umfasst, um eine terrestrische oder satellitengebunden Mobilfunkverbindung zwischen einer oder mehreren Baumaschinen und/oder einem oder mehreren Baufahrzeugen und/oder einem oder mehreren Sensoren und dem Zentralrechner zu bewirken, wobei der Computer ein Mobilfunk-Modul umfasst, um eine terrestrische oder satellitengebunden Mobilfunkverbindung mit dem Zentralrechner zu bewirken, um über den Zentralrechner die Prozessdaten zu erhalten.

Diese Ausgestaltung ist vorteilhaft, da hierdurch eine zentrale Verwaltung der Prozessdaten von einer oder mehreren Baustellen ermöglicht wird, und ausgehend von der Zentralstelle können die relevanten Prozessdaten an den Computer zur Weiterleitung an den wearable Computer übertragen werden, unter Verwendung eines Mobilfunknetzes.

Gemäß weiteren Ausführungsbeispielen umfasst die Vorrichtung eine Datenbrille mit einer Kamera, wobei die Datenbrille konfiguriert ist, ein Bild einer Baumaschine, eines Baufahrzeugs oder eines Sensor, von der/dem die Prozessdaten empfangen werden sollen, über das Drahtloskommmunikations-Modul an den Computer zu senden, wobei der Computer konfiguriert ist, um die in dem empfangenen Bild dargestellte Einheit zu identifizieren, von der identifizierten Einheit Prozessdaten für zumindest einen ausgewählten Parameter anzufordern und die Prozessdaten für den ausgewählten Parameter über das Drahtloskommmunikations-Modul an die Datenbrille zur Darstellung an den Träger der Datenbrille zu senden.

Diese Ausgestaltung ist vorteilhaft, da hierdurch eine einfache Auswahl der Einheit ermöglicht wird, von welcher der Bauleiter oder allgemeiner gesprochen der Träger der Datenbrille Informationen erhalten möchte, insbesondere Prozessdaten, die im Hinblick auf die Einhaltung von Grenzwerten zu überwachen sind. Die Auswahl erfolgt über das bildgebende Verfahren und erfordert keine Kommunikation mit dem Computer oder der Baumaschine selbst, so dass auf einfache Art und Weise eine Auswahl der aktuell interessierenden Einheit, die zu überwachen ist, ermöglicht wird.

Gemäß weiteren Ausführungsbeispielen ist der wearable Computer konfiguriert, um dem Träger ansprechend auf die Alarmierung eine Eingabe zu ermöglichen, um die Straßenfertigung derart zu steuern, dass die Prozessdaten wieder in den vorbestimmten Bereich zurückkehren.

Diese Ausgestaltung ist vorteilhaft, da hierdurch beispielsweise dem Bauleiter die Möglichkeit gegeben wird, unmittelbar auf die Alarmierung zu reagieren, also unmittelbar darauf, dass ein Prozessparameter den erlaubten Bereich verlassen hat. Durch eine entsprechende Eingabe über den wearable Computer wird ein Steuersignal erzeugt, welches an die entsprechende Einheit, beispielsweise an die Baumaschine zurückgegeben wird, um so beispielsweise die Einstellungen der Baumaschine zu modifizieren, so dass die Prozessdaten wieder innerhalb des erwünschten Bereichs liegen. Somit wird gemäß diesem Ausführungsbeispiel eine schnelle bzw. unverzügliche Reaktion auf die Alarmierung ermöglicht, ohne dass eine Eingabe an dem zwischengeschalteten Computer oder an der Baumaschine bzw. der zu steuernden Einheit erforderlich wäre, wodurch die Reaktionszeit erhöht wird.

Die vorliegende Erfindung schafft ferner ein Verfahren zur Überwachung von Prozessdaten bei der Straßenfertigung, mit:
Empfangen von Prozessdaten der Straßenfertigung an einem wearable Computer, und
Alarmieren des Trägers des wearable Computers durch den wearable Computer, wenn die Prozessdaten außerhalb eines vorbestimmten Bereichs liegen.

Gemäß Ausführungsbeispielen umfasst das Verfahren ferner das Darstellen der empfangenen Prozessdaten einem Träger des wearable Computers. Gemäß weiteren Ausführungsbeispielen umfasst das Verfahren ferner das Erzeugen einer Eingabe an dem wearable Computer, ansprechend auf das Alarmieren, und das Steuern der Straßenfertigung derart, dass die Prozessdaten wieder in den vorbestimmten Bereich zurückkehren, ansprechend auf die Eingabe.

Somit bezieht sich die Erfindung gemäß Ausführungsbeispielen auf eine kontinuierliche Überwachung des gesamten Bauprozesses einer Straße mittels einer Datenbrille oder einer Datenuhr, auf der Prozessdaten, insbesondere kritische Daten, einem an der Baustelle befindlichen Bauleiter, Projektleiter oder einer ähnlichen Person schnell angezeigt werden können. Kritische Daten sind beispielsweise Prozessdaten, welche außerhalb eines zulässigen Bereichs liegen, beispielsweise dass eine Temperatur eines in einem LKW angelieferten Baumaterials/Asphalts zu gering ist, dass die Durchschnittstemperatur, die hinter dem Fertiger gemessen wird, zu gering ist und Ähnliches. Werden solche außerhalb eines zulässigen Bereichs liegenden Prozessdaten erkannt, ist es erforderlich, umgehend Gegenmaßnahmen zu ergreifen, um die erforderliche Einbauqualität der Straße zu gewährleisten.

Ausführungsbeispiele der vorliegenden Erfindung werden nachfolgend anhand der beiliegenden Zeichnungen näher erläutert. Es zeigen:
- Fig. 1: eine schematische Übersichtsdarstellung einer Straßenfertigung, bei der der erfindungsgemäße Ansatz zur Überwachung von Prozessdaten zum Einsatz kommt;
- Fig. 2: eine beispielhafte Darstellung von Prozessparametern auf einer Anzeige eines wearable Computers;
- Fig. 3: ein Ausführungsbeispiel, bei dem an einer Baustelle zusätzlich zum wearable Computer in Form einer Datenuhr ein weiterer Computer angeordnet ist, beispielsweise ein Laptop-Computer, ein Tablet-Computer oder ein Smartphone;
- Fig. 4: ein weiteres Ausführungsbeispiel der vorliegenden Erfindung, bei dem eine Datenuhr bzw. ein wearable Computer direkt mit einem Straßenfertiger an einer Baustelle kommuniziert;
- Fig. 5: wiederum ein weiteres Ausführungsbeispiel der vorliegenden Anmeldung, gemäß dem eine Datenuhr bzw. ein wearable Computer mit einem entfernt von einer Baustelle stationierten Server oder Zentralrechner kommuniziert; und
- Fig. 6: ein Ausführungsbeispiel des erfindungsgemäßen Verfahrens zur Überwachung von Prozessdaten bei der Straßenfertigung.

Bei der nachfolgenden Beschreibung der bevorzugten Ausführungsbeispiele der vorliegenden Erfindung werden gleiche oder gleichwirkende Elemente mit den gleichen Bezugszeichen versehen.

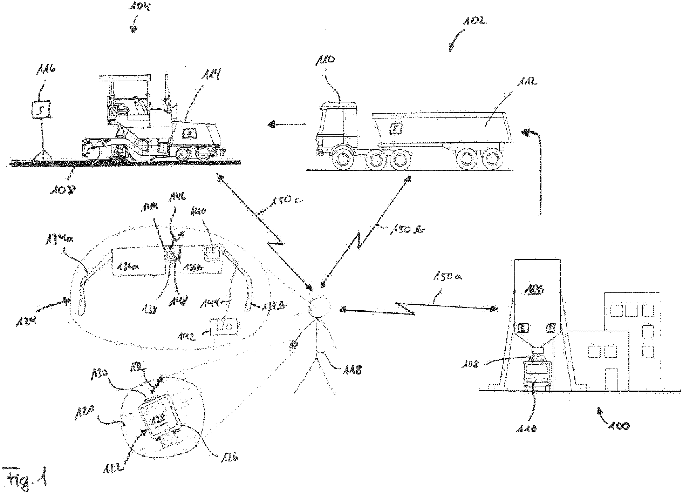

Fig. 1 zeigt eine schematische Übersichtsdarstellung einer Straßenfertigung, bei der der erfindungsgemäße Ansatz zur Überwachung von Prozessdaten zum Einsatz kommt. Fig. 1 zeigt die Straßenfertigung angefangen bei einem Asphaltmischwerk 100 über den bei 102 schematisch gezeigten Transport des Asphaltmaterials bis zur Erzeugung des Straßenbelags an der schematisch mit 104 bezeichneten Baustelle.

Das Asphaltmischwerk 100 umfasst einen Vorratsbehälter 106, in dem ein zu verbauendes Asphaltmaterial 108 enthalten ist, welches für den Transport zur Baustelle 104 in einen LKW 110, beispielsweise einen Muldensattelschlepper, eingefüllt wird. Die Zusammensetzung und Temperatur des Asphaltmaterials 108 wird im Asphaltmischwerk über entsprechende Sensoren S, die in Fig. 1 schematisch gezeigt sind, überwacht, um sicherzustellen, dass vom Asphaltmischwerk 100 das Asphaltmaterial 108 mit einer vordefinierten Qualität abgegeben wird.

Während des Transports 102 durch den LKW 110 erfolgt beispielsweise eine Überwachung der Temperatur des in einer Transportmulde 112 befindlichen Asphaltmaterials. Ferner kann während des Transports 102 die Fahrzeit des LKW 110 vom Asphaltmischwerk 100 zur Baustelle 104 überwacht werden, ebenso die Anzahl der für den Transport eingesetzten LKWs 110. Die Überwachung der Temperatur erfolgt mittels eines Sensors S, der entweder, wie in Fig. 1 gezeigt ist, in der Mulde 112 angeordnet ist, oder Teil der Zugmaschine des LKW 110 ist.

An der Baustelle 104 erfolgt ein Einbau des Asphaltmaterials 108 durch einen Straßenfertiger 114, der das Asphaltmaterial von einem der LKWs 110 erhält und auf an sich bekannte Art und Weise verbaut. Der Straßenfertiger 114 kann entsprechende Sensoren S aufweisen, um bestimmte Parameter des verarbeiteten Materials zu überwachen, beispielsweise die Temperatur des Asphaltmaterials, die Einbaudicke und Ähnliches. Zusätzlich oder alternativ können diese Parameter auch noch durch externe, an der Baustelle 104 befindliche Sensoren 116 erfasst werden, beispielsweise durch handtragbare Temperatursensoren, mittels derer Mitarbeiter die Temperatur der eingebauten Asphaltschicht unmittelbar nach dem Fertiger 114 erfassen.

An der Baustelle 104 kann ferner eine Nachbearbeitung der durch den Fertiger 114 eingebrachten Asphaltdecke vorgesehen sein, beispielsweise durch Straßenwalzen. Auch während der Nachbearbeitung durch die Straßenwalzen können bestimmte Parameter, wie beispielsweise der Verdichtungsgrad oder die Dicke der nachbearbeiteten Schicht durch entsprechende Sensorik überwacht werden. Ferner kann im Zusammenhang mit dem Bau einer Straße vorgesehen sein, vor dem eigentlichen Einbau der Asphaltdecke den Untergrund zu bearbeiteten, beispielsweise durch eine Straßenfräse, welche einen alten Belag zumindest teilweise abträgt. Alternativ kann auch der gesamte Straßenbelag abgetragen werden und der Untergrund neu bearbeitet werden, beispielsweise durch entsprechende Baumaschinen, wie Bagger, Planierraupen und Ähnliches. Gleiches gilt für den vollständigen Neubau einer Straße, bei der dem Einbau der Asphaltschicht eine entsprechende Vorbereitung des Untergrunds durch entsprechende Baumaschinen vorausgeht. Auch während dieser vorbereitenden Arbeiten können vorbestimmte Parameter überwacht werden, beispielsweise die Menge der abgetragenen, alten Asphaltschicht bzw. die Höhe des bearbeiteten Bodens, z.B. bezogen auf eine Referenzhöhe. Auch hierfür weisen die entsprechenden Baumaschinen entsprechende Sensoren auf.

Die durch die oben erwähnten Sensoren im Asphaltmischwerk 100, während des Transports 102 und an der Baustelle 104 überwachten Parameter erzeugen Prozessdaten, anhand derer die Einhaltung bestimmter Grenzwerte überwacht werden kann. Wie oben bereits erwähnt wurde, sind Ansätze bekannt, bei denen beispielsweise an der Baustelle 104 die Prozessdaten von den verschiedenen Sensoren oder zumindest einem Teil der Sensoren empfangen und überwacht werden, um so einem Bauleiter die Möglichkeit zu geben, den Bauprozess zu steuern. Um die im Stand der Technik auftretenden Probleme im Hinblick auf Prozessdaten, die eine Abweichung der Parameter außerhalb eines bestimmten Bereichs anzeigen, zu lösen, wird erfindungsgemäß ein Ansatz vorgeschlagen, bei dem beispielsweise der für die Baustelle 104 verantwortliche Bauleiter 118 einen sogenannten wearable Computer trägt, also ein Computersystem, das während der Anwendung am Körper des Bauleiters 118 angeordnet bzw. befestigt ist. Der wearable Computer unterscheidet sich von der Verwendung anderer mobiler Computersysteme, beispielsweise Laptops, Smartphones oder Tablet-Computer, dadurch, dass die hauptsächliche Tätigkeit des Bauleiters nicht die Benutzung des Computers selbst ist. Im Zusammenhang mit der vorliegenden Erfindung bedeutet dies, dass der Bauleiter 118 den wearable Computer trägt und über diesen vorbestimmte Prozessdaten von den verschiedenen Sensoren betreffend die erwünschten Parameter erhält. Gemäß dem in Fig. 1 dargestellten Ausführungsbeispiel handelt es sich bei dem wearable Computer um eine am Arm 120 des Bauleiters 118 getragene Datenuhr 122 (im Folgenden auch als Smartwatch bezeichnet) und/oder um eine durch den Bauleiter 118 getragene Datenbrille (Smart Eyeglasses) 124.

Die Smartwatch 122 kann eine im Wesentlichen handelsübliche Smartwatch sein, die entsprechend den Lehren der vorliegenden Anmeldung programmiert wurde bzw. auf der eine Anwendung installiert ist, beispielsweise ein entsprechend den Lehren der vorliegenden Anmeldung arbeitendes Programm, z.B. eine App. Die Smartwatch 122 enthält einen Körper 126, in dem die in der Figur nicht dargestellten Datenverarbeitungselemente angeordnet sind, um die erfindungsgemäße Funktionalität zu implementieren. Ferner umfasst die Smartwatch 122 die Anzeige 128, beispielsweise in Form eines Touchscreens, über die Prozessdaten angezeigt werden, wie dies nachfolgend noch näher erläutert wird. Über den Touchscreen kann ferner ermöglicht werden, eine Eingabe in die Smartwatch 122 zu bewirken, die dann beispielsweise an eine entfernte Stelle übertragen wird, wie dies nachfolgend noch näher erläutert wird. Die Smartwatch 122 umfasst ferner das in Fig. 1 schematisch dargestellte Drahtloskommunikations-Modul 130, um eine drahtlose Kommunikation 132 zu ermöglichen.

Auch die Datenbrille 124 kann eine im Wesentlichen handelsübliche Datenbrille sein, die entsprechend den Lehren der vorliegenden Anmeldung programmiert wurde bzw. auf der eine Anwendung installiert ist, beispielsweise ein entsprechend den Lehren der vorliegenden Anmeldung arbeitendes Programm, z.B. eine App. Die Datenbrille 124 umfasst zwei Bügel 134a, 134b, zwischen denen zwei Brillengläser 136a, 136b angeordnet sind, die über einen Steg 138 miteinander verbunden sind. Eines oder mehrere der Gläser 136a, 136b umfassen einen Anzeigeabschnitt 140, auf dem die dem Träger der Brille 124 darzustellenden Daten angezeigt werden können. Ferner umfasst die Datenbrille 124 eine Eingabe/Ausgabe (l/O-Input/Output)-Einheit, die ferner die erforderlichen Datenverarbeitungselemente aufweisen kann, um ein Programm ablaufen zu lassen, welches entsprechend den Lehren der vorliegenden Anmeldung arbeitet. Die I/O-Einheit 142 ist über ein Kabel 143 mit dem Anzeigebereich 140 verbunden, um die zur Anzeige erforderlichen Daten an den Anzeigebereich 140 bereitzustellen. Ferner ermöglicht die I/O-Einheit 142 die Eingabe von Daten durch den Träger der Brille 124. Die Datenbrille 124 umfasst bei dem gezeigten Beispiel im Bereich des Steges 138 zum einen ein Drahtloskommunikations-Modul 144 für eine drahtlose Kommunikation 146 sowie ein Kameramodul 148.

Gemäß dem in Fig. 1 dargestellten Ausführungsbeispiel der vorliegenden Erfindung ist der wearable Computer 122, 124, der durch den Bauleiter 118 getragen wird, vorgesehen, um Prozessdaten betreffend die Straßenfertigung zu empfangen, wie dies schematisch durch die Pfeile 150a bis 150c dargestellt ist. Mittels des Drahtloskommunikations-Moduls 130, 144 ist der wearable Computer in der Lage Prozessdaten betreffend vorbestimmte Parameter von dem Asphaltmischwerk 100 während des Transports des Asphalts und/oder von der Baustelle zu empfangen. Ausgewählte Prozessdaten können auf der Anzeige 128, 140 des wearable Computers 122, 124 angezeigt werden, wobei ein vorbestimmter bzw. zulässiger Bereich, innerhalb dem die angezeigten Prozessdaten liegen sollen, vorgegeben ist. Wird dieser Bereich verlassen, so erfolgt eine Alarmierung des Bauleiters 118, beispielsweise durch Auslösen eines Vibrationsalarms. Alternativ oder zusätzlich kann ein visueller oder ein akustischer Alarm ausgelöst werden, so dass der Bauleiter 118, ohne die Notwendigkeit, die Prozessdaten ständig im Blick zu haben, über die Abweichung unmittelbar bei deren Auftreten informiert wird. Dies ermöglicht dem Bauleiter, ohne Verzögerung entsprechende Gegenmaßnahmen einzuleiten, beispielsweise durch Maßnahmen an dem Asphaltmischwerk 100, während des Transports 102 und/oder an der Baustelle 104. Diese Maßnahmen können beispielsweise dadurch eingeleitet werden, dass über den wearable Computer 122, 124 eine Eingabe erfolgt, die dann über das Drahtloskommunikations-Modul 130, 144 an die entsprechenden Einheiten weitergeleitet wird.

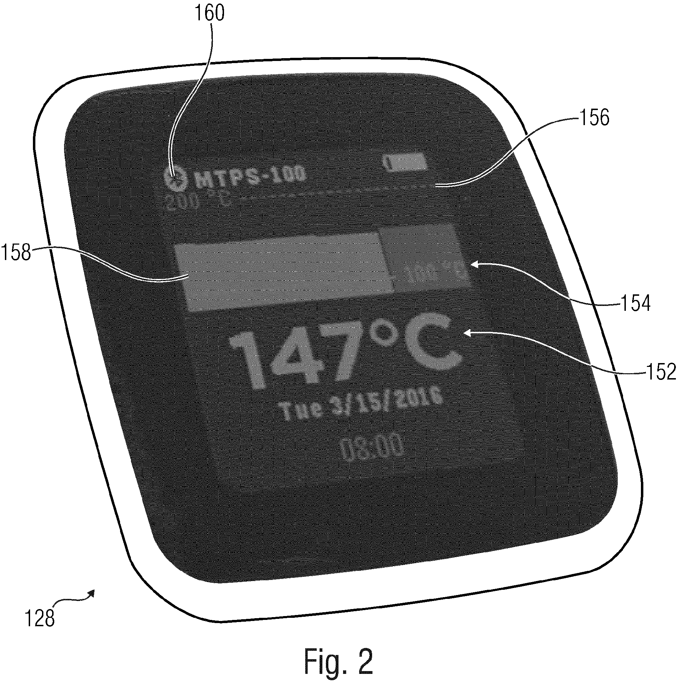

Fig. 2 zeigt eine beispielhafte Darstellung von Prozessparametern auf einer Anzeige 128, 140 eines wearable Computers 122, 124. Tatsächlich zeigt die Fig. 2 eine Darstellung der Anzeige 128 einer Smartwatch 122, die entsprechend den Lehren der vorliegenden Anmeldung programmiert wurde. Bei dem in Fig. 2 dargestellten Ausführungsbeispiel zeigt die Smartwatch 122 auf ihrer Anzeige 128 die Temperatur des Asphaltmaterials an, beispielsweise die Temperatur des Asphaltmaterials bei dessen Verarbeitung durch den Straßenfertiger 114. Die Temperatur des Asphaltmaterials bei der Verarbeitung bzw. beim Einbau durch den Straßenfertiger 114 wird über einen Sensor an der Bohle des Straßenfertigers oder durch einen externen, z.B. handgetragenen Sensor 116 erfasst, wie dies oben erläutert wurde. Die Anzeige 128 umfasst im Bereich 152 eine numerische Angabe des Temperaturwertes. Im oberen Teil der Anzeige 128 erfolgt ferner eine graphische Darstellung der Temperatur, wobei in der Anzeige 128 eine Untergrenze 154 und eine Obergrenze 156 der Temperatur angegeben ist, die bei dem gezeigten Ausführungsbeispiel 100 °C bzw. 200 °C beträgt. Die numerische Angabe 152 ist ferner über eine vordefinierte Zeitdauer graphisch dargestellt, wie dies bei 158 gezeigt ist. Wie zu erkennen ist, liegen die oberen Werte für die Temperatur etwa in der Mitte zwischen der Untergrenze 154 und der Obergrenze 156, also im zulässigen Bereich. Im Bereich 160 der Anzeige 128 ist angezeigt, dass eine Drahtloskommunikation, im dargestellten Ausführungsbeispiel eine Bluetooth-Kommunikation, mit dem ebenfalls angegebenen Gerät MTPS-100 vorliegt, so dass die Anzeige 128 zum einen die Temperatur anzeigt, und zum anderen anzeigt, woher die Temperatur stammt, also von welcher Einheit, bei dem gezeigten Ausführungsbeispiel entweder von dem Straßenfertiger 114 oder dem Sensor 116. Im Bereich unterhalb der numerischen Angabe 152 der Temperatur ist ferner das Datum und die aktuelle Uhrzeit angegeben.

Die Fig. 2 ist lediglich eine beispielhafte Darstellung ist, und gemäß anderen Ausführungsbeispielen können auch andere Prozessparameter oder zusätzliche Prozessparameter angezeigt werden. Ferner kann vorgesehen sein, eine rein graphische Darstellung der Prozessdaten oder eine rein numerische Darstellung der Prozessdaten anzugeben, wobei gemäß Ausführungsbeispielen eine Angabe der Obergrenze/Untergrenze optional ist. Für einen erfindungsgemäßen Einsatz ist es ausreichend, dass die Smartwatch Kenntnis über die Grenzen hat (ohne die Notwendigkeit die Grenzen anzuzeigen), so dass bei Überschreiten/Unterschreiten derselben, eine entsprechende Alarmierung ausgelöst werden kann und entsprechend angezeigt werden kann.

Erfindungsgemäß werden somit Prozessdaten auf der Smartwatch oder auf der Datenbrille angezeigt, und die Smartwatch bzw. die Datenbrille ist in der Lage, bei Prozessdaten, welche außerhalb eines zulässigen Bereichs 154, 156 liegen, eine Reaktion auszuüben, beispielsweise indem der Träger bzw. Bauleiter alarmiert wird, entweder durch ein akustisches Signal, ein visuelles Signal oder indem eine taktile Alarmierung erfolgt. Gemäß Ausführungsbeispielen kann die durch den wearable Computer ausgeübte Reaktion ein Vibrieren, ein Blinken und/oder die Ausgabe eines Warntons umfassen. Die Vibrationsfunktion wird beim Einsatz auf der Baustelle 104 bevorzugt, da es in der Umgebung der Baustelle im Regelfall laut ist und ein Warnton durch eine Person gegebenenfalls nicht wahrgenommen wird.

Der an der Baustelle befindliche Bauleiter oder Projektleiter 118 kann gemäß Ausführungsbeispielen ansprechend auf den Alarm umgehend entsprechende Maßnahmen ergreifen, wie beispielsweise die Geschwindigkeit des Fertigers 114 verringern oder erhöhen, Maschinenparameter am Fertiger 114 oder an der Walze einer Fräse verändern, Mischtemperaturen am Asphaltmischwerk verändern und Ähnliches, und hierdurch die erwünschte Einbauqualität der Straße gewährleisten.

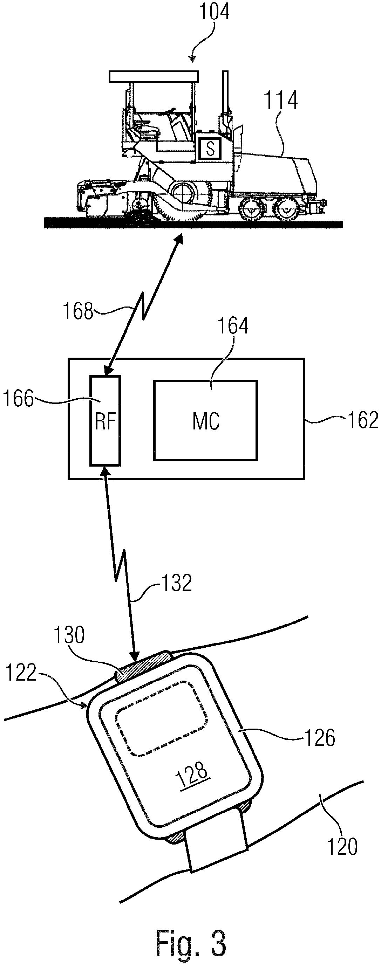

Nachfolgend werden weitere Ausführungsbeispiele der vorliegenden Erfindung anhand der Fig. 3 bis 5 näher erläutert, wobei die Erläuterung dieser Ausführungsbeispiele anhand der in Fig. 1 gezeigten Smartwatch 122 erfolgt, die Ausführungen jedoch gleichermaßen bei Verwendung einer Datenbrille 124 gemäß Fig. 1 gelten. Ferner werden die in Fig. 3 bis 5 gezeigten Ausführungsbeispiele anhand einer Datenkommunikation zwischen dem wearable Computer und einem Straßenfertiger 114 an der Baustelle 104 erläutert, jedoch gelten die nachfolgenden Ausführungsbeispiele und Ausführungen gleichermaßen für eine Kommunikation mit anderen Daten bereitstellenden Einheiten an der Baustelle 104 bzw. während des Transports 102 oder am Asphaltmischwerk 100.

Fig. 3 zeigt ein Ausführungsbeispiel, bei dem an der Baustelle 104 zusätzlich zum wearable Computer in Form der Smartwatch 122 ein weiterer Computer 162 angeordnet ist, beispielsweise ein Laptop-Computer, ein Tablet-Computer oder ein Smartphone. Der Computer 162 umfasst einen Prozessor 164 sowie ein Drahtloskommunikations-Modul bzw. ein drahtlose Schnittstelle 166, welches zum einen mit der Smartwatch 122 kommuniziert, wie dies durch den Pfeil 132 angedeutet ist und zum anderen eine Funkverbindung mit dem Straßenfertiger 114 ermöglicht, wie dies durch den Pfeil 168 dargestellt ist. Der tragbare Computer 162 ist vorgesehen, um Parameter im Zusammenhang mit der Straßenfertigung zu erfassen, beispielsweise über das Drahtloskommunikations-Modul 166, und einem Bauleiter 118 an der Baustelle 104 darzustellen, beispielsweise auf eine Art und Weise, wie sie im Stand der Technik grundsätzlich bekannt ist. Ferner ist der Computer 162 so programmiert, dass es dem Bauleiter 118 ermöglicht wird, aus den Parametern, die dort angezeigt werden, mindestens eines auszuwählen, und dessen Prozessdaten zur Anzeige auf der Smartwatch 122 an dieselbe zu übertragen. Somit ermöglicht das anhand der Fig. 3 dargestellte Ausführungsbeispiel, dass der an der Baustelle 104 befindliche Bauleiter 118 manuell auswählen kann, welche Daten von welcher Maschine auf der Anzeige 128 der Smartwatch 122 (oder auf der Datenbrille 124) angezeigt werden sollen. Dieser Ansatz ist vorteilhaft, da die Anzeigefläche 128 auf der Smartwatch 122 (oder der Datenbrille 124) eingeschränkt ist, so dass nur ein Teil der gesamten Prozessdaten darstellbar ist. Um diese Kommunikation zu ermöglichen, verfügt die Smartwatch 122 über das Drahtloskommunikations-Modul 130, um eine Funkverbindung aufzubauen, wie beispielsweise eine Bluetooth-Verbindung, um so eine Verbindung mit dem Smartphone, Tablet-Computer bzw. Laptop-Computer 162 herbeizuführen. Der Computer 162 ist derart programmiert, dass der Bauleiter bzw. der Projektleiter die Möglichkeit erhält, Funktionen auf der Datenbrille bzw. auf der Smartwatch auszulösen, um zu bestimmen, welche Maschinen- und Prozessdaten angezeigt werden sollen.

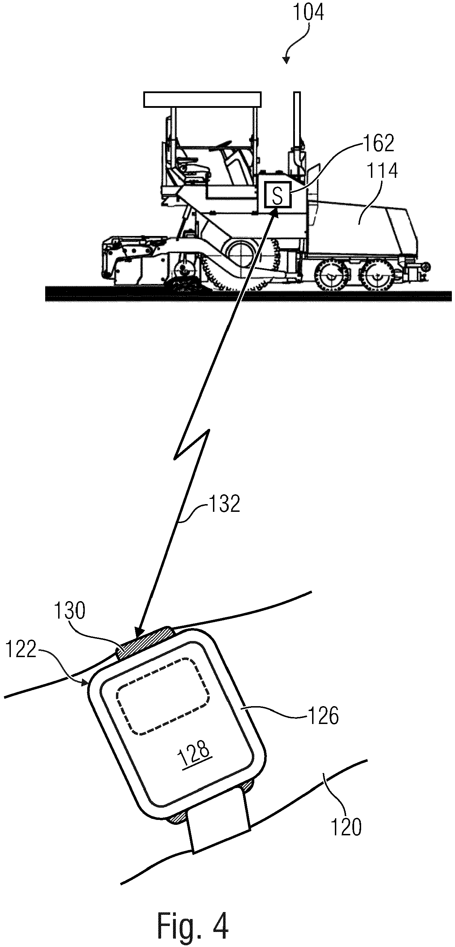

Fig. 4 zeigt ein weiteres Ausführungsbeispiel der vorliegenden Erfindung, bei dem die Smartwatch 122 bzw. der wearable Computer direkt mit dem Straßenfertiger 114 an einer Baustelle 104 kommuniziert, wie dies anhand des Pfeils 132 angedeutet ist. Das anhand der Fig. 4 gezeigte Ausführungsbeispiel ermöglicht eine Kommunikation der Smartwatch 122 (der Datenbrille 124) mit dem Straßenfertiger 114. Der Straßenfertiger 114 bzw. die anderen Maschinen/Fahrzeuge/Sensoren, mit denen eine entsprechende Kommunikation erfolgen soll, umfassen eine geeignete Kommunikationsvorrichtung, beispielsweise ein WLAN-Modul, welches mit dem als WLAN-Modul ausgebildeten Drahtloskommunikations-Modul des wearable Computers kommuniziert. Die Sensoren und Messeinrichtungen der Fertigungsmaschinen sowie die Steuerungs- und Auswerteeinheiten derselben kommunizieren gemäß Ausführungsbeispielen über den CAN-Bus (CAN = Controller Area Network). Zur Implementierung der erfindungsgemäßen Vorgehensweise ist gemäß Ausführungsbeispielen vorgesehen, einen weiteren Busknoten entlang des CAN-Busses vorzusehen, und zwar in Form eines CAN/WLAN-Gateway, so dass die entsprechenden Daten auf dem CAN-Bus zur Übertragung an den wearable Computer an das WLAN-Modul bereitgestellt werden können.

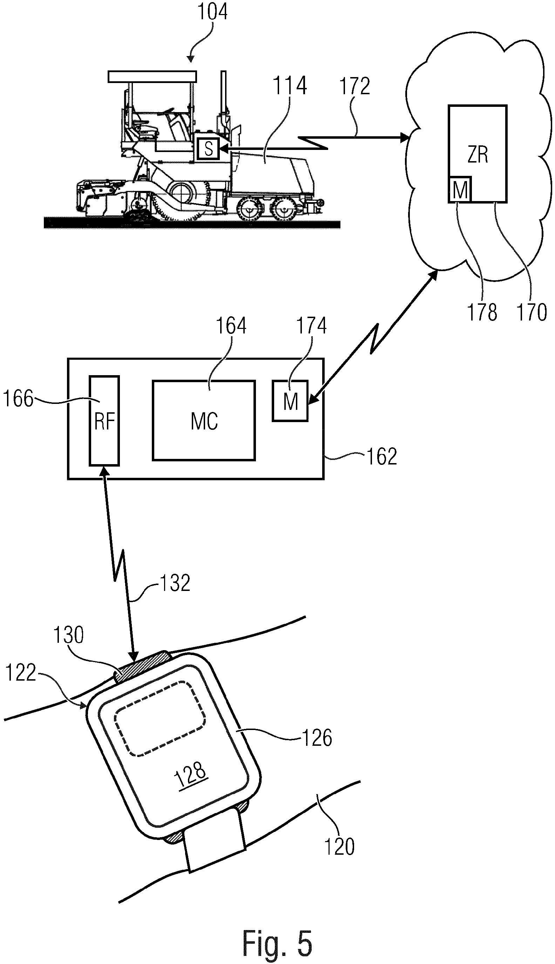

Fig. 5 zeigt ein weiteres Ausführungsbeispiel der vorliegenden Anmeldung, gemäß dem die Smartwatch 122 (Datenbrille) mit einem entfernt von der Baustelle 104 stationierten Server oder Zentralrechner 170 kommuniziert. Gemäß diesem Ausführungsbeispiel kommuniziert der Straßenfertiger 114 ebenfalls mit dem Zentralrechner 170, wie dies durch den Pfeil 172 angedeutet ist. Ferner ist der anhand der Fig. 3 erläuterte Computer 162 vorgesehen, der zusätzlich mit einem Mobilfunkmodul 174 versehen ist, um über eine Mobilfunk-Verbindung 176 eine Kommunikation mit dem Zentralrechner 170 zu ermöglichen, der ebenfalls ein Mobilfunkmodul 178 aufweist. Das anhand der Fig. 5 gezeigte Ausführungsbeispiel ermöglicht somit eine Kommunikation der Smartwatch 122 mit der entfernt von der Baustelle 104 angeordneten zentralen Rechnereinheit 170 und verwendet hierfür zusätzlich ein Smartphone oder einen Tablet-PC 162, der auf die oben beschriebene Art und Weise über die Kommunikationseinheit 166 mit der Smartwatch 122 kommuniziert, beispielsweise über eine Bluetooth-Verbindung. Die Kommunikation mit dem Zentralrechner 170 bzw. dem Server erfolgt, wie erwähnt, über ein überörtliches Funknetzwerk, beispielsweise GSM, wobei das Mobilfunknetz ein terrestrisches oder ein Satelliten-gestütztes Netzwerk sein kann. Bei dem anhand der Fig. 5 gezeigten Ausführungsbeispiel wird eine Kommunikation der Smartwatch mit allen relevanten Positionen ermöglicht, beispielsweise mit dem Asphaltmischwerk, entlang des Transports und an der Baustelle, so dass eine Datenanzeige der relevanten Prozessdaten entlang jeder Position der Prozesskette ermöglicht wird. Falls entlang der Prozesskette, beispielsweise im Asphaltmischwerk oder während des Transports, Daten außerhalb eines zulässigen Bereichs liegen, beispielsweise eine Misch- bzw. Einfülltemperatur am Asphaltmischwerk zu gering ist, kann über die Smartwatch eine entsprechende Reaktion erzeugt werden, wie beispielsweise ein Vibrieren, so dass der Bauleiter auf diesem Missstand unmittelbar aufmerksam gemacht wird, und gegebenenfalls unmittelbar Schritte zur Abstellung dieses Missstands einleiten kann.

Gemäß weiteren Ausführungsbeispielen der vorliegenden Anmeldung ist der wearable Computer in Form einer Datenbrille (siehe Fig. 1) ausgestaltet, die zusätzlich zu dem Kommunikationsmodul 144, dem Anzeigemodul 140 und dem Eingabe/Ausgabe-Modul 142 das Kameramodul 148 aufweist. Gemäß Ausführungsbeispielen ist vorgesehen, dass unter Verwendung der Kamera eine automatische Auswahl der Maschine, beispielsweise des Straßenfertigers 114 an der Baustelle 104, erfolgen kann, von der die Prozessdaten zur Anzeige auf der Anzeigefläche 140 bereitgestellt werden sollen. Die Datenbrille 124 erfasst über das Kameramodul 148 bzw. über die darin eingebaute Kamera eine Maschine, beispielsweise den Straßenfertiger 114, und das erfasste Bild wird über die Funkschnittstelle 132 an ein Smartphone, einen Tablet-PC oder einen Laptop 162 (siehe Fig. 3 und 5) gesendet. Der Computer 162 erkennt mittels Bildverarbeitung die Maschine 114 und wählt diese automatisch aus, so dass dem an der Baustelle befindlichen Bauleiter oder Projektleiter Maschinen- oder Prozessdaten der anvisierten und ausgewählten Maschine angezeigt werden, beispielsweise im Falle eines Straßenfertigers die aktuellen Einbauparameter wie beispielsweise Temperatur und Materialverbrauch, wodurch der Bauleiter unmittelbar einen Überblick über den momentanen Einbauprozess erhält und über zu starke Abweichungen unmittelbar informiert wird.

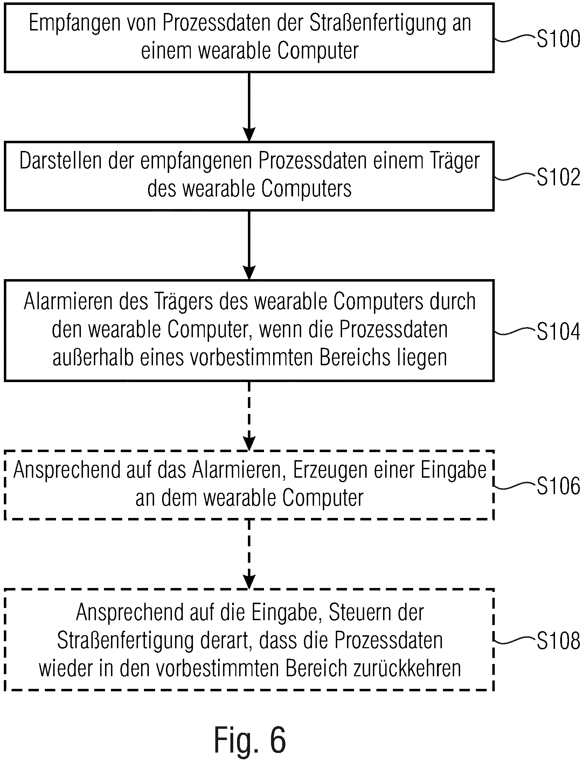

Fig. 6 zeigt ein Ausführungsbeispiel des erfindungsgemäßen Verfahrens zur Überwachung von Prozessdaten bei der Straßenfertigung. Erfindungsgemäß werden im Schritt S100 die Prozessdaten der Straßenfertigung an einem wearable Computer empfangen und im Schritt S102 einem Träger des wearable Computers dargestellt. Wird festgestellt, dass die Prozessdaten außerhalb eines vorbestimmten Bereichs liegen, so wird der Träger im Schritt S104 durch den wearable Computer alarmiert, beispielsweise durch einen Vibrationsalarm und/oder durch ein visuelles/akustisches Signal. Gemäß Ausführungsbeispielen kann vorgesehen sein, dass ansprechend auf das Alarmieren eine Eingabe an dem wearable Computer erzeugt wird, wie dies im optionalen Schritt S106 dargestellt ist. Ansprechend auf die Eingabe kann die Straßenfertigung derart gesteuert werden, dass die Prozessdaten wieder in den vorbestimmten Bereich zurückkehren, wie dies im optionalen Schritt S108 dargestellt ist.

Ausführungsbeispiele der vorliegenden Erfindung wurden oben unter Bezugnahme auf eine Datenuhr oder eine Datenbrille als mögliche Ausführung des wearable Computers beschrieben. Die vorliegende Erfindung ist nicht auf diese Formen eines wearable Computers beschränkt. Ausführungsbeispiele umfassen andere Formen eines wearable Computers, z.B. eine elektronisch Kontaktlinse, ein Head-Up Display, das z.B. auf dem Visier eines Bauhelms angezeigt wird, oder ein Augmented-Reality-Anzeigegerät.

Bei anderen Ausführungsbeispielen umfasst der wearable Computer ein adaptives Gerät, z.B. ein Armband, das vibrieren kann, um den Träger zu alarmieren, oder andere Geräte, die keine Anzeige aufweisen, aber eine Alarmierung des Trägers ermöglichen. Bei solchen Ausführungsbeispielen ist der wearable Computer konfiguriert, um die Prozessdaten der Straßenfertigung zu empfangen, z.B. zusammen mit Informationen, die einen zulässigen Bereich für die Prozessdaten angeben, wie eine Ober- und/oder Untergrenze für die Daten. Stellt der wearable Computer fest, das bei Prozessdaten die außerhalb des durch die Grenzen angegebenen Bereichs liegen, wird eine Alarmierung des Trägers des wearable Computers bewirkt, z.B. durch ein Vibrieren des Armbands und/oder durch ein akustisches/visuelles Signal, z.B. einen Warnton oder einen Farbwechsel des wearable Computers. Die Alarmierung ermöglicht dem Träger die Daten zu prüfen, z.B. auf einem Laptop-Computer, der die Prozessdaten empfängt und darstellt. Über den Laptop-Computer können dann Eingaben bewirkt werden, um den Prozess zu steuern, so dass die Prozessdaten wieder in dem zulässigen Bereich sind. Optional kann das Armband eine Anzeige zur Darstellung der Daten und/oder eine Eingabevorrichtung zur Eingabe von Informationen zur Steuerung der Straßenfertigung umfassen

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Asphaltmischwerk
- 102: Transport
- 104: Baustelle
- 106: Vorratsbehälter
- 108: Asphaltmaterial
- 110: LKW
- 112: Transportmulde
- 114: Straßenfertiger
- 116: handtragbarer Temperatursensor
- 118: Bauleiter
- 120: Arm des Bauleiters
- 122: Smartwatch (wearable Computer)
- 124: Datenbrille (wearable Computer)
- 126: Körper der Smartwatch
- 128: Anzeige der Smartwatch
- 130: Drahtloskommunikations-Modul der Smartwatch
- 132: drahtlose Kommunikation
- 134a, 134b: Brillenbügel der Datenbrille
- 136a, 136b: Brillengläser der Datenbrille
- 138: Steg der Datenbrille
- 140: Anzeige der Datenbrille
- 142: I/O-Einheit der Datenbrille
- 143: Kabel der Datenbrille
- 144: Drahtloskommunikations-Modul der Datenbrille
- 146: drahtlose Kommunikation
- 148: Kameramodul der Datenbrille
- 150a-150c: drahtlose Kommunikation
- 152: numerische Angabe auf der Anzeige der Smartwatch
- 154: Untergrenze für einen Temperaturwert
- 156: Obergrenze für einen Temperaturwert
- 158: graphische Darstellung des Temperaturwerts
- 160: Drahtloskommunikationsanzeige
- 162: weiterer Computer
- 164: Prozessor des weiteren Computers
- 166: Drahtloskommunikations-Modul des weiteren Computers
- 168: Funkverbindung
- 170: Zentralrechner
- 172: Mobilfunk-Verbindung
- 174: Mobilfunkmodul des weiteren Computers
- 176: Mobilfunk-Verbindung
- 177: Mobilfunkmodul des Zentralrechners
- 178: Mobilfunkmodul des Zentralrechners
- S: Sensoren

## Patentansprüche

1. Vorrichtung zur Überwachung von Prozessdaten (152, 158) bei der Straßenfertigung, mit:
einem wearable Computer (122, 124),
wobei der wearable Computer (122, 124) konfiguriert ist, um Prozessdaten (152, 158) der Straßenfertigung zu empfangen, und
wobei der wearable Computer (122, 124) konfiguriert ist, um bei Prozessdaten (152, 158), die außerhalb eines vorbestimmten Bereichs liegen, eine Alarmierung des Trägers (118) des wearable Computers (122, 124) zu bewirken.

2. Vorrichtung nach Anspruch 1, bei der der wearable Computer (122, 124) konfiguriert ist, um die Prozessdaten (152, 158) einem Träger (118) des wearable Computers (122, 124) darzustellen.

3. Vorrichtung nach Anspruch 1 oder 2, bei der der wearable Computer (122, 124) konfiguriert ist, um die Prozessdaten (152, 158) von einer Baustelle (104), an der die Straßenfertigung durchgeführt wird, von einem Herstellungsort (100), an dem das Material zur Straßenfertigung erzeugt wird, und/oder von einer oder mehreren Positionen (102) zwischen dem Herstellungsort (100) und der Baustelle (104) zu empfangen.

4. Vorrichtung nach einem der Ansprüche 1 bis 3, mit:
einem Computer (162), der konfiguriert ist, um Prozessdaten (152, 158) für eine Mehrzahl von Parametern der Straßenfertigung zu empfangen,
wobei der Computer (162) und der wearable Computer (122, 124) jeweils ein Drahtloskommmunikations-Modul (130, 144, 166) umfassen, und
wobei der Computer (162) konfiguriert ist, um dem Träger (118) des wearable Computers (122, 124) zu ermöglichen, aus der Mehrzahl von Parametern der Straßenfertigung zumindest einen Parameter auszuwählen, und um eine Übertragung der Prozessdaten (152, 158) des ausgewählten Parameters an den wearable Computer (122, 124) zu bewirken.

5. Vorrichtung nach Anspruch 4, bei der der Computer (162) konfiguriert ist, um über das Drahtloskommmunikations-Modul (166) ferner mit einer oder mehreren Baumaschinen (114) und/oder mit einem oder mehreren Baufahrzeugen (110) und/oder mit einem oder mehreren Sensoren (116) zu kommunizieren, um die Prozessdaten (152, 158) zu empfangen.

6. Vorrichtung nach Anspruch 5, bei der der Computer (162) einen tragbaren Computer umfasst, der an der Baustelle (104) angeordnet ist.

7. Vorrichtung nach Anspruch 4, bei der der Computer (162) einen Steuerrechner einer Baumaschine (114), eines Baufahrzeugs (110) oder eines Sensors (116) umfasst.

8. Vorrichtung nach Anspruch 4, mit:
einem Zentralrechner (170), der entfernt von der Baustelle (104) und dem Herstellungsort (100) angeordnet ist, und der ein Mobilfunk-Modul (178) umfasst, um eine terrestrische oder satellitengebunden Mobilfunkverbindung (176) zwischen einer oder mehreren Baumaschinen (114) und/oder einem oder mehreren Baufahrzeugen (110) und/oder einem oder mehreren Sensoren (116) und dem Zentralrechner (170) zu bewirken,
wobei der Computer (162) ein Mobilfunk-Modul (174) umfasst, um eine terrestrische oder satellitengebunden Mobilfunkverbindung (176) mit dem Zentralrechner (170) zu bewirken, um über den Zentralrechner (170) die Prozessdaten (152, 158) zu erhalten.

9. Vorrichtung nach einem der Ansprüche 1 bis 8, bei der der wearable Computer (122, 124) konfiguriert ist, um eine visuelle Alarmierung und/oder eine akustische Alarmierung und/oder eine taktile Alarmierung zu bewirken.

10. Vorrichtung nach einem Anspruch 9, bei der der wearable Computer (122, 124) konfiguriert ist, um einen Vibrationsalarm zu bewirken.

11. Vorrichtung nach einem der Ansprüche 1 bis 10, bei der der wearable Computer eine Datenuhr (122) umfasst.

12. Vorrichtung nach einem der Ansprüche 1 bis 10, bei der der wearable Computer eine ein Augmented-Reality-Anzeigegerät umfasst.

13. Vorrichtung nach einem der Ansprüche 1 bis 10, bei der der wearable Computer eine Datenbrille (124) oder ein Head-Up Display umfasst.

14. Vorrichtung nach einem der Ansprüche 1 bis 13, bei der
der wearable Computer (124) eine Kamera (148) umfasst,
wobei der wearable Computer (124) konfiguriert ist, ein Bild einer Baumaschine (114), eines Baufahrzeugs (110) oder eines Sensor (116), von der/dem die Prozessdaten (152, 158) empfangen werden sollen, über das Drahtloskommmunikations-Modul (130, 144) an den Computer (162) zu senden,
wobei der Computer (162) konfiguriert ist, um die in dem empfangenen Bild dargestellte Einheit zu identifizieren, von der identifizierten Einheit Prozessdaten (152, 158) für zumindest einen ausgewählten Parameter anzufordern und die Prozessdaten (152, 158) für den ausgewählten Parameter über das Drahtloskommmunikations-Modul (166) an den wearable Computer zur Darstellung an den Träger (118) der Datenbrille zu senden.

15. Vorrichtung nach einem der Ansprüche 1 bis 14, bei der der wearable Computer (122, 124) konfiguriert ist, um dem Träger (118) ansprechend auf die Alarmierung eine Eingabe zu ermöglichen, um die Straßenfertigung derart zu steuern, dass die Prozessdaten (152, 158) wieder in den vorbestimmten Bereich zurückkehren.

16. Verfahren zur Überwachung von Prozessdaten (152, 158) bei der Straßenfertigung, mit:
Empfangen (S100) von Prozessdaten (152, 158) der Straßenfertigung an einem wearable Computer (122, 124), und
Alarmieren (S104) des Trägers (118) des wearable Computers (122, 124) durch den wearable Computer (122, 124), wenn die Prozessdaten (152, 158) außerhalb eines vorbestimmten Bereichs liegen.

17. Verfahren nach Anspruch 16, mit:
Darstellen (S102) der empfangenen Prozessdaten (152, 158) einem Träger (118) des wearable Computers (122, 124).

18. Verfahren nach Anspruch 16 oder 17, mit:
ansprechend auf das Alarmieren, Erzeugen (S106) einer Eingabe an dem wearable Computer (122, 124), und
ansprechend auf die Eingabe, Steuern (S108) der Straßenfertigung derart, dass die Prozessdaten (152, 158) wieder in den vorbestimmten Bereich zurückkehren.

19. Computerprogramm-Produkt mit Anweisung, die ein Ausführen des Verfahren nach einem der Ansprüche 16 bis 18 bewirken, wenn die Anweisungen durch einen Computer ausgeführt werden.

## Geänderte Patentansprüche

### Geänderte Patentansprüche gemäss Regel 137(2) EPÜ.

1. Vorrichtung zur Überwachung von Prozessdaten (152, 158) bei der Straßenfertigung, mit:
einem wearable Computer (122, 124),
wobei der wearable Computer (122, 124) konfiguriert ist, um Prozessdaten (152, 158) der Straßenfertigung zu empfangen, und
wobei der wearable Computer (122, 124) konfiguriert ist, um bei Prozessdaten (152, 158), die außerhalb eines vorbestimmten Bereichs liegen, eine Alarmierung des Trägers (118) des wearable Computers (122, 124) zu bewirken.

2. Vorrichtung nach Anspruch 1, bei der der wearable Computer (122, 124) konfiguriert ist, um die Prozessdaten (152, 158) einem Träger (118) des wearable Computers (122, 124) darzustellen.

3. Vorrichtung nach Anspruch 1 oder 2, bei der der wearable Computer (122, 124) konfiguriert ist, um die Prozessdaten (152, 158) von einer Baustelle (104), an der die Straßenfertigung durchgeführt wird, von einem Herstellungsort (100), an dem das Material zur Straßenfertigung erzeugt wird, und/oder von einer oder mehreren Positionen (102) zwischen dem Herstellungsort (100) und der Baustelle (104) zu empfangen.

4. Vorrichtung nach einem der Ansprüche 1 bis 3, mit:
einem Computer (162), der konfiguriert ist, um Prozessdaten (152, 158) für eine Mehrzahl von Parametern der Straßenfertigung zu empfangen,
wobei der Computer (162) und der wearable Computer (122, 124) jeweils ein Drahtloskommmunikations-Modul (130, 144, 166) umfassen, und
wobei der Computer (162) konfiguriert ist, um dem Träger (118) des wearable Computers (122, 124) zu ermöglichen, aus der Mehrzahl von Parametern der Straßenfertigung zumindest einen Parameter auszuwählen, und um eine Übertragung der Prozessdaten (152, 158) des ausgewählten Parameters an den wearable Computer (122, 124) zu bewirken.

5. Vorrichtung nach Anspruch 4, bei der der Computer (162) konfiguriert ist, um über das Drahtloskommmunikations-Modul (166) ferner mit einer oder mehreren Baumaschinen (114) und/oder mit einem oder mehreren Baufahrzeugen (110) und/oder mit einem oder mehreren Sensoren (116) zu kommunizieren, um die Prozessdaten (152, 158) zu empfangen.

6. Vorrichtung nach Anspruch 5, bei der der Computer (162) einen tragbaren Computer umfasst, der an der Baustelle (104) angeordnet ist.

7. Vorrichtung nach Anspruch 4, bei der der Computer (162) einen Steuerrechner einer Baumaschine (114), eines Baufahrzeugs (110) oder eines Sensors (116) umfasst.

8. Vorrichtung nach Anspruch 4, mit:
einem Zentralrechner (170), der entfernt von der Baustelle (104) und dem Herstellungsort (100) angeordnet ist, und der ein Mobilfunk-Modul (178) umfasst, um eine terrestrische oder satellitengebunden Mobilfunkverbindung (176) zwischen einer oder mehreren Baumaschinen (114) und/oder einem oder mehreren Baufahrzeugen (110) und/oder einem oder mehreren Sensoren (116) und dem Zentralrechner (170) zu bewirken,
wobei der Computer (162) ein Mobilfunk-Modul (174) umfasst, um eine terrestrische oder satellitengebunden Mobilfunkverbindung (176) mit dem Zentralrechner (170) zu bewirken, um über den Zentralrechner (170) die Prozessdaten (152, 158) zu erhalten.

9. Vorrichtung nach einem der Ansprüche 1 bis 8, bei der der wearable Computer (122, 124) konfiguriert ist, um eine visuelle Alarmierung und/oder eine akustische Alarmierung und/oder eine taktile Alarmierung zu bewirken.

10. Vorrichtung nach einem Anspruch 9, bei der der wearable Computer (122, 124) konfiguriert ist, um einen Vibrationsalarm zu bewirken.

11. Vorrichtung nach einem der Ansprüche 1 bis 10, bei der der wearable Computer eine Datenuhr (122) umfasst.

12. Vorrichtung nach einem der Ansprüche 1 bis 10, bei der der wearable Computer eine ein Augmented-Reality-Anzeigegerät umfasst.

13. Vorrichtung nach einem der Ansprüche 1 bis 10, bei der der wearable Computer eine Datenbrille (124) oder ein Head-Up Display umfasst.

14. Vorrichtung nach einem der Ansprüche 4 bis 13, bei der
der wearable Computer (124) eine Kamera (148) umfasst,
wobei der wearable Computer (124) konfiguriert ist, ein Bild einer Baumaschine (114), eines Baufahrzeugs (110) oder eines Sensor (116), von der/dem die Prozessdaten (152, 158) empfangen werden sollen, über das Drahtloskommmunikations-Modul (130, 144) an den Computer (162) zu senden,
wobei der Computer (162) konfiguriert ist, um die in dem empfangenen Bild dargestellte Einheit zu identifizieren, von der identifizierten Einheit Prozessdaten (152, 158) für zumindest einen ausgewählten Parameter anzufordern und die Prozessdaten (152, 158) für den ausgewählten Parameter über das Drahtloskommmunikations-Modul (166) an den wearable Computer zur Darstellung an den Träger (118) der Datenbrille zu senden.

15. Vorrichtung nach einem der Ansprüche 1 bis 14, bei der der wearable Computer (122, 124) konfiguriert ist, um dem Träger (118) ansprechend auf die Alarmierung eine Eingabe zu ermöglichen, um die Straßenfertigung derart zu steuern, dass die Prozessdaten (152, 158) wieder in den vorbestimmten Bereich zurückkehren.

16. Verfahren zur Überwachung von Prozessdaten (152, 158) bei der Straßenfertigung, mit:
Empfangen (S100) von Prozessdaten (152, 158) der Straßenfertigung an einem wearable Computer (122, 124), und
Alarmieren (S104) des Trägers (118) des wearable Computers (122, 124) durch den wearable Computer (122, 124), wenn die Prozessdaten (152, 158) außerhalb eines vorbestimmten Bereichs liegen.

17. Verfahren nach Anspruch 16, mit:
Darstellen (S102) der empfangenen Prozessdaten (152, 158) einem Träger (118) des wearable Computers (122, 124).

18. Verfahren nach Anspruch 16 oder 17, mit:
ansprechend auf das Alarmieren, Erzeugen (S106) einer Eingabe an dem wearable Computer (122, 124), und
ansprechend auf die Eingabe, Steuern (S108) der Straßenfertigung derart, dass die Prozessdaten (152, 158) wieder in den vorbestimmten Bereich zurückkehren.

19. Computerprogramm-Produkt mit Anweisung, die ein Ausführen des Verfahren nach einem der Ansprüche 16 bis 18 bewirken, wenn die Anweisungen durch einen Computer ausgeführt werden.
